# EUROPEAN PATENT APPLICATION

(11) **EP 4 637 064 A1**
(43) Date of publication of application: **22.10.2025**
(21) Application number: 22968288.5
(22) Date of filing: 16.12.2022
(51) Int. Cl.: H04L 1/18

(54) **CAPABILITY INDICATION METHOD AND APPARATUS, CAPABILITY DETERMINATION METHOD AND APPARATUS, AND COMMUNICATION APPARATUS AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2022/139789
(87) International publication number: WO 2024/124584

(57) **Abstract**

The present disclosure relates to the technical field of communications, in particular to a capability indication method and apparatus, a capability determination method and apparatus, and a communication apparatus and a storage medium. The capability indication method comprises: sending a physical uplink shared channel (PUSCH) to a network device, wherein the PUSCH is used for indicating whether a terminal has a full-duplex capability. According to the embodiments of the present disclosure, by means of a PUSCH, a terminal can indicate to a network device whether the terminal has a full-duplex capability, such that the network device can determine whether the terminal has a full-duplex capability, and thus the network device can perform appropriate configuration and scheduling for the terminal according to the capability of the terminal, thereby facilitating ensuring that a terminal having a full-duplex capability can be scheduled by the network device in a timely manner to perform full-duplex communication, so as to improve the communication efficiency, and avoid the problem occurring when a terminal having no full-duplex capability is scheduled by the network device to perform full-duplex communication.

## Description

### TECHNICAL FIELD

The present disclosure relates to the field of communication technology, and specifically to a capability indication method, a capability determination method, a capability indication apparatus, a capability determination apparatus, a capability indication system, a communication apparatus, and a computer-readable storage medium.

### BACKGROUND

In order to realize full-duplex communication of a terminal, a network device may configure a subband for the terminal on a time domain resource, for example, configuring an uplink subband for the terminal in a downlink time slot, then in a downlink time slot, uplink data sent by the terminal may be received in the uplink subband, and/or downlink data may be sent to the terminal on a frequency domain resource outside the uplink subband, thereby realizing full-duplex communication of the terminal in the downlink time slot. However, not all terminals support full-duplex communication, which will cause some problems in the above process.

### SUMMARY

Embodiments of the present disclosure propose a capability indication method, a capability determination method, a capability indication apparatus, a capability determination apparatus, a capability indication system, a communication apparatus, and a computer-readable storage medium to solve technical problems in related technologies.

According to a first aspect of the embodiments of the present disclosure, a capability indication method is provided, performed by a terminal, including: sending a physical uplink shared channel to a network device, in which the physical uplink shared channel is configured to indicate whether the terminal has a full-duplex capability.

According to a second aspect of the embodiments of the present disclosure, a capability determination method is provided, performed by a network device, including: receiving a physical uplink shared channel sent by a terminal; and determining whether the terminal has a full-duplex capability according to the physical uplink shared channel.

According to a third aspect of the embodiments of the present disclosure, a capability indication apparatus is provided. The apparatus includes a sending module, configured to send a physical uplink shared channel to a network device, wherein the physical uplink shared channel is configured to indicate whether the terminal has a full-duplex capability.

According to a fourth aspect of the embodiments of the present disclosure, a capability determination apparatus is provided. The capability determination apparatus is performed by a network device. The capability determination apparatus includes a receiving module and a processing module. The receiving module is configured to receive a physical uplink shared channel sent by a terminal. The processing module is configured to determine whether the terminal has a full-duplex capability according to the physical uplink shared channel.

According to a fifth aspect of the embodiments of the present disclosure, a capability indication system is provided, including a terminal, a network device, wherein the terminal is configured to perform the capability indication method described above, and the network device is configured to perform the capability determination method described above.

According to a sixth aspect of the present disclosure, a communication apparatus including a processor and a memory for storing a computer program is provided. When the computer program is executed by the processor, the capability indication method described above is implemented.

According to a seventh aspect of the present disclosure, a communication apparatus including a processor and a memory for storing a computer program is provided. When the computer program is executed by the processor, the capability determination method described above is implemented.

According to an eighth aspect of the present disclosure, a computer-readable storage medium for storing a computer program is provided. When the computer program is executed by a processor, the capability indication method described above is implemented.

According to a ninth aspect of the present disclosure, a computer-readable storage medium for storing a computer program is provided. When the computer program is executed by a processor, the capability determination method described above is implemented.

According to the embodiments of the present disclosure, a terminal may indicate to a network device whether the terminal has a full-duplex capability through a physical uplink shared channel (PUSCH), so that the network device may determine whether the terminal has the full-duplex capability, so that the network device may make appropriate configuration and scheduling for the terminal according to the terminal's capability. This is conducive to ensuring that the terminal with the full-duplex capability may be scheduled by the network device in time for full-duplex communication, thereby improving communication efficiency and avoiding problems caused by the terminal without the full-duplex capability being scheduled by the network device for full-duplex communication.

### BRIEF DESCRIPTION OF THE DRAWINGS

In order to more clearly illustrate the technical solution in the embodiments of the present disclosure, the drawings required for use in the description of the embodiments will be briefly introduced below. Obviously, the drawings described below are only some embodiments of the present disclosure. For ordinary technicians in this field, other drawings can be obtained based on these drawings without any creative work.
FIG. 1 is a flowchart of a capability indication method according to an embodiment of the present disclosure;
FIG. 2 is a flowchart of a capability indication method according to an embodiment of the present disclosure;
FIG. 3 is a flowchart of a capability indication method according to an embodiment of the present disclosure;
FIG. 4 is a flowchart of a capability determination method according to an embodiment of the present disclosure;
FIG. 5 is a flowchart of a capability determination method according to an embodiment of the present disclosure;
FIG. 6 is a flowchart of a capability determination method according to an embodiment of the present disclosure;
FIG. 7 is a schematic diagram showing interaction between a terminal and a network device according to an embodiment of the present disclosure;
FIG. 8 is a block diagram of a capability indication apparatus according to an embodiment of the present disclosure;
FIG. 9 is a block diagram of a capability determination apparatus according to an embodiment of the present disclosure;
FIG. 10 is a block diagram of an apparatus for capability determination according to an embodiment of the present disclosure;
FIG. 11 is a block diagram of an apparatus for capability indication according to an embodiment of the present disclosure.

### DETAILED DESCRIPTION

The technical solution in the embodiments of the present disclosure will be described clearly and completely in combination of the accompanying drawings below. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first message may also be referred to as the second information, and likewise the second information may be referred to as the first message. Depending on the context, the words "if" and "in a case" used here may be interpreted as "when" or "in response to determining".

For the purpose of brevity and ease of understanding, the terms used herein to characterize size relationships include "greater than" or "less than", "higher than" or "lower than". However, those skilled in the art can understand that the term "greater than" also covers the meaning of "greater than or equal to", and "less than" also covers the meaning of "less than or equal to"; the term "higher than" covers the meaning of "higher than or equal to", and "lower than" also covers the meaning of "lower than or equal to".

In an embodiment, a network device may configure a downlink subband for a terminal on an uplink time domain resource. If the network device may perform full-duplex communication and the terminal may perform half-duplex communication, the terminal may perform downlink communication in the downlink subband in the uplink time domain unit, or perform uplink communication on a frequency domain resource outside the downlink subband; if both the network device and the terminal may perform full-duplex communication, the terminal may perform downlink communication in the downlink subband in the uplink time domain unit, and perform uplink communication on a frequency domain resource outside the downlink subband.

In an embodiment, a network device may configure an uplink subband for a terminal on a downlink time domain resource. If the network device may perform full-duplex communication and the terminal may perform half-duplex communication, the terminal may perform uplink communication in the uplink subband in the downlink time domain unit, or perform downlink communication on a frequency domain resource outside the uplink subband; if both the network device and the terminal may perform full-duplex communication, the terminal may perform uplink communication in the uplink subband in the downlink time domain unit, and perform downlink communication on a frequency domain resource outside the uplink subband.

However, not all terminals have the full-duplex capability. If a subband is configured for a terminal without the full-duplex capability according to the above embodiment, it may cause confusion in the terminal's communication operation within a time domain resource configured with the subband. In addition, since the terminal cannot use the subband for communication well, which leads to a waste of the frequency domain resource.

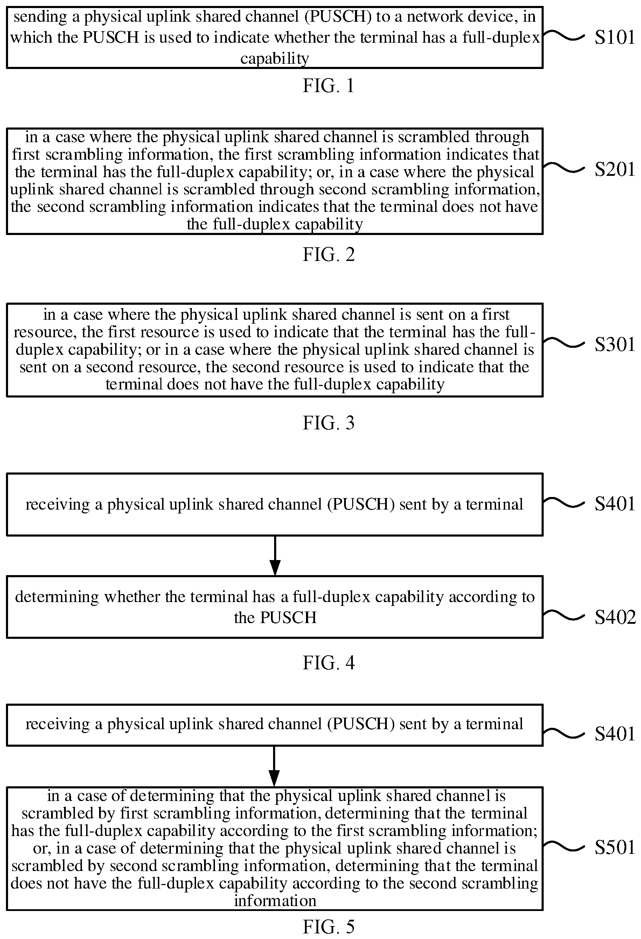

FIG. 1 is a flowchart of a capability indication method according to an embodiment of the present disclosure. The capability indication method in this embodiment may be performed by a terminal. The terminal may include, but not limited to, a communication apparatus such as a mobile phone, a tablet computer, a wearable device, a sensor, an Internet of Things device, etc. The terminal may communicate with a network device, and the network device includes but is not limited to a network device in a 4G, 5G, 6G, etc. communication system, such as a base station, a core network, etc.

As shown in FIG. 1, the capability indication method may include the following steps.

At step S101, a physical uplink shared channel (PUSCH) is sent to a network device. The PUSCH is used to indicate whether the terminal has a full-duplex capability.

In an embodiment, the terminal may send a PUSCH to the network device during a random access process, and may then explicitly or implicitly indicate to the network device through the PUSCH that the terminal has the full-duplex capability or does not have the full-duplex capability, in which full-duplex may also be referred to as subband full duplex (SBFD).

Correspondingly, during random access with the terminal, the network device may determine that the terminal has the full-duplex capability or does not have the full-duplex capability according to the PUSCH, so that the terminal may be properly configured and/or scheduled according to the terminal's capability.

In an embodiment, in a case where the network device determines that the terminal does not have the full-duplex capability, the network device may not configure a subband for the terminal.

In an embodiment, in a case where the network device determines that the terminal does not have the full-duplex capability, even if the network device configures a subband for the terminal, the network device does not schedule the terminal to use the subband for communication.

For example, no downlink subband is configured for the terminal in an uplink time domain resource; for example, no uplink subband is configured for the terminal in a downlink time domain resource. In this way, problems caused by a terminal without the full-duplex capability attempting full-duplex communication in the time domain resource can be avoided, and a waste of the frequency domain resource caused by configuring the subband for the terminal can be avoided.

In an embodiment, the time domain resource includes at least one of the following: a slot, a symbol, for example, the symbol may be an orthogonal frequency division multiplexing (OFDM) symbol.

In an embodiment, the network device may configure a subband for the terminal in case of determining that the terminal has the full-duplex capability. In an embodiment, the network device may also schedule the terminal to communicate on the subband in case of configuring the subband for the terminal.

For example, a downlink subband is configured for the terminal in the uplink time domain resource, then the terminal may be scheduled to perform downlink communication in the downlink subband of the uplink time domain resource, and/or the terminal may be scheduled to perform uplink communication in the frequency domain resource outside the downlink subband corresponding to the uplink time domain resource, thereby realizing full-duplex communication of the terminal in the uplink time domain resource.

For example, an uplink subband is configured for the terminal in the downlink time domain resource, then the terminal may be scheduled to perform uplink communication in the uplink subband of the downlink time domain resource, and/or the terminal may be scheduled to perform downlink communication in the frequency domain resource outside the uplink subband corresponding to the downlink time domain resource, thereby realizing full-duplex communication of the terminal in the downlink time domain resource.

In an embodiment, the network device may first configure subbands for multiple terminals (e.g., all terminals in the same cell). After receiving the PUSCH sent by each terminal during the random access process, it is determined whether each terminal has the full-duplex capability. For the terminal with the full-duplex capability, the network device schedules the terminal with the full-duplex capability to communicate on the subband, while for the terminal without the full-duplex capability, the network device does not schedule the terminal to communicate on the subband.

For example, in the downlink time domain resource, uplink subbands are configured for terminal #1, terminal #2, and terminal #3. During the random access process, terminal #1, terminal #2, and terminal #3 respectively indicate whether they have the full-duplex capability through the resources used for random access. For example, terminal #3 has the full-duplex capability, while terminal #1 and terminal #2 do not have the full-duplex capability.

The network device may schedule terminal #3 to perform uplink communication in the uplink subband of the downlink time domain resource, and/or schedule terminal #3 to perform downlink communication in the frequency domain resource outside the uplink subband corresponding to the downlink time domain resource, thereby achieving full-duplex communication of terminal #3 in the downlink time domain resource. The network device does not schedule terminal #1 or terminal #2 to perform uplink communication in the uplink subband of the downlink time domain resource, so as to avoid problems caused by terminal #1 and terminal #2 attempting to perform full-duplex communication without the full-duplex capability.

In an embodiment, the PUSCH may be used to carry indication information to explicitly indicate to the network device whether the terminal has the full-duplex capability. In an embodiment, scrambling information of the PUSCH may be used to implicitly indicate whether the terminal has the full-duplex capability. In an embodiment, a resource used to send the PUSCH may be used to implicitly indicate whether the terminal has the full-duplex capability.

It can be seen that according to the embodiments of the present disclosure, the terminal may indicate to the network device whether the terminal has the full-duplex capability through the PUSCH, so that the network device may determine whether the terminal has the full-duplex capability, and the network device may make appropriate configuration and scheduling for the terminal according to the terminal's capability. This is conducive to ensuring that the terminal with the full-duplex capability may be scheduled by the network device in time for full-duplex communication, thereby improving communication efficiency and avoiding problems caused by the terminal without the full-duplex capability being scheduled by the network device for full-duplex communication.

It should be noted that in the embodiments of the present disclosure, whether the terminal has the full-duplex capability may be determined according to the terminal's capability. For example, if the terminal supports communication in a first transmission direction within the subband of the same time domain resource, and/or communication in a second transmission direction in the frequency domain resource outside the subband, then it can be determined that the terminal has the full-duplex capability. The first transmission direction and the second transmission direction are different transmission directions. For example, when the first transmission direction is uplink, the second transmission direction is downlink; when the first transmission direction is uplink, the second transmission direction is flexible; or, when the first transmission direction is downlink, the second transmission direction is uplink; or, when the first transmission direction is downlink, the second transmission direction is flexible.

Alternatively, in the embodiments of the present disclosure, whether the terminal has the full-duplex capability may be set by the terminal as needed. For example, although the terminal has the full-duplex capability, for certain considerations, such as when power saving is required, or when the amount of business data of the terminal is small and a latency requirement is not high, the terminal may not be reported to have the full-duplex capability, so as to prevent the network device from configuring, in the same time domain resource, that the terminal to communicate in the first transmission direction within the subband, and/or the terminal to communicate in the second transmission direction in the frequency domain resource outside the subband, which may cause the terminal to consume too much power in a short period of time.

In an embodiment, the physical uplink shared channel includes at least one of the following:
a physical uplink shared channel in a random access message;
a physical uplink shared channel scrambled by scrambling information; or
a physical uplink shared channel sent on a pre-configured resource.

In an embodiment, the terminal may send a random access message to the network device during a random access process. The random access message may carry the PUSCH, and further, the PUSCH may be used to indicate whether the terminal has the full-duplex capability.

In an embodiment, the random access performed by the terminal may be a four-step random access or a two-step random access. Corresponding to the random access performed, the random access message includes at least one of the following: Msg3 in the four-step random access; or MsgA in the two-step random access.

In a specific implementation, when the terminal performs the four-step random access, it may send a PUSCH to the network device via Msg3, and indicate whether the terminal has the full-duplex capability through the PUSCH. When the terminal performs the two-step random access, it may send a PUSCH to the network device via MsgA, and indicate whether the terminal has the full-duplex capability through the PUSCH.

In an embodiment, the network device may configure the scrambling information for the terminal, or the terminal may determine the scrambling information according to a protocol agreement, and the scrambling information includes but is not limited to a cell radio network temporary identifier (C-RNTI). The PUSCH sent by the terminal to the network device may be scrambled by the scrambling information, and the terminal may indicate whether the terminal has the full-duplex capability through the PUSCH scrambled by the scrambling information.

In an embodiment, before establishing a communication connection with the network device, the terminal may send a PUSCH to the network device on a pre-configured resource, for example, the pre-configured resource includes but is not limited to a configured grant (CG) uplink resource. Then the terminal may indicate whether the terminal has the full-duplex capability through the PUSCH sent on the pre-configured resource.

In an embodiment, the physical uplink shared channel is used to indicate whether the terminal has the full-duplex capability by at least one of the following:
indication information carried by the physical uplink shared channel, the indication information indicating whether the terminal has the full-duplex capability;
scrambling information of the physical uplink shared channel, the scrambling information indicating whether the terminal has the full-duplex capability; or
a resource used to send the physical uplink shared channel, the resource being used to indicate whether the terminal has the full-duplex capability.

In an embodiment, the terminal may carry the indication information in the PUSCH, and the indication information explicitly indicates whether the terminal has the full-duplex capability. Correspondingly, after receiving the PUSCH, the network device may parse the indication information in the PUSCH to determine that the terminal has the full-duplex capability or the terminal does not have the full-duplex capability.

Whether the indication information exists can be used to distinguish and indicate whether the terminal has the full-duplex capability. For example, by parsing the PUSCH, the network device determines that the PUSCH does not carry the indication information, then it may determine that the terminal does not have the full-duplex capability; for example, by parsing the PUSCH, the network device determines that the PUSCH carries the indication information, then it may determine that the terminal has the full-duplex capability.

Alternatively, different values may be indicated by the indication information to distinguish and indicate whether the terminal has the full-duplex capability. Taking the indication information occupying 1 bit as an example, the network device may determine that the terminal has the full-duplex capability by parsing the PUSCH and determining that the value of the indication information in the PUSCH is 1; for example, the network device may determine that the terminal does not have the full-duplex capability by parsing the PUSCH and determining that the value of the indication information in the PUSCH is 0.

FIG.2 is a schematic flowchart of a capability indication method according to an embodiment of the present disclosure. As shown in FIG. 2, the scrambling information indicates whether the terminal has the full-duplex capability by the following ways.

At step 201, in a case where the physical uplink shared channel is scrambled through first scrambling information, the first scrambling information indicates that the terminal has the full-duplex capability; or, in a case where the physical uplink shared channel is scrambled through second scrambling information, the second scrambling information indicates that the terminal does not have the full-duplex capability. The first scrambling information is different from the second scrambling information.

It should be noted that the embodiment shown in FIG. 2 may be implemented independently or in combination with at least one other embodiment in the present disclosure. The specific selection may be made as needed and the present disclosure is not limited thereto.

In an embodiment, the terminal may scramble the sent PUSCH through scrambling information, in which the scrambling information includes but is not limited to RNTI, such as C-RNTI, and further the scrambling information may be used to indicate whether the terminal has the full-duplex capability.

For example, when the terminal scrambles the PUSCH using the first scrambling information, it may indicate that the terminal has the full-duplex capability. For example, when the terminal scrambles the PUSCH using the second scrambling information, it may indicate that the terminal does not have the full-duplex capability.

Correspondingly, the network device may attempt to decode the PUSCH through the first scrambling information and the second scrambling information. In the case where the PUSCH is successfully decoded through the first scrambling information, the network device may determine that the terminal scrambles the PUSCH through the first scrambling information, and according to the first scrambling information, the network device may determine that the terminal has the full-duplex capability, and then may schedule the terminal to communicate in the subband configured for the terminal; in the case where the PUSCH is successfully decoded through the second scrambling information, the network device may determine that the terminal scrambles the PUSCH through the second scrambling information, and according to the second scrambling information, the network device may determine that the terminal has the full-duplex capability, and thus may not schedule the terminal to communicate in the subband configured for the terminal.

Taking the scrambling information including RNTI as an example, on the one hand, an RNTI specific to a terminal with the full-duplex capability may be determined according to the protocol agreement, for example, also called SBFD-specific RNTI, which is the first scrambling information. On the other hand, the network device may configure a temporary C-RNTI for all terminals in the cell, for example, also called TC-RNTI, which is the second scrambling information.

Take a terminal sending Msg3 to a network device as an example. When a terminal with the full-duplex capability sends Msgs3, it may choose to use SBFD-specific RNTI to scramble the PUSCH carried therein; when a terminal without the full-duplex capability sends Msgs3, it may choose to use TC-RNTI to scramble the PUSCH carried therein.

Correspondingly, the network device may attempt to decode the received Msgs3 through SBFD-specific RNTI and TC-RNTI. If the decoding is successful through SBFD-specific RNTI, it can be determined that the terminal scrambles the PUSCH through SBFD-specific RNTI, and according to the SBFD-specific RNTI, it can be determined that the terminal has the full-duplex capability, and then the terminal may be scheduled for communication in the subband configured for the terminal; in the case of successfully decoding the PUSCH through TC-RNTI, the network device may determine that the terminal scrambles the PUSCH through TC-RNTI, and according to the TC-RNTI, it can be determined that the terminal has the full-duplex capability, and thus the terminal may be not scheduled for communication in the subband configured for the terminal.

FIG. 3 is a schematic flowchart of a capability indication method according to an embodiment of the present disclosure. As shown in FIG. 3, the resource is used to indicate whether the terminal has the full-duplex capability by the following ways.

At step S301, in a case where the physical uplink shared channel is sent on a first resource, the first resource is used to indicate that the terminal has the full-duplex capability; or in a case where the physical uplink shared channel is sent on a second resource, the second resource is used to indicate that the terminal does not have the full-duplex capability.

It should be noted that the embodiment shown in FIG. 3 can be implemented independently or in combination with at least one other embodiment in the present disclosure. The specific selection may be made as needed, and the present disclosure is not limited thereto.

In an embodiment, the terminal may indicate whether the terminal has the full-duplex capability through the resource used to send the PUSCH. For example, when the terminal sends the PUSCH on the first resource, the first resource indicates that the terminal has the full-duplex capability; for example, when the terminal sends the PUSCH on the second resource, the second resource indicates that the terminal does not have the full-duplex capability.

Correspondingly, the network device may attempt to detect (also described as receiving) the PUSCH on the first resource and the second resource. If the PUSCH is detected on the first resource, the network device may determine that the terminal sends the PUSCH on the first resource, and based on the first resource, the network device may determine that the terminal has the full-duplex capability, and then may schedule the terminal for communication in the subband configured for the terminal; if the PUSCH is detected on the second resource, the network device may determine that the terminal sends the PUSCH on the second resource, and based on the second resource, the network device may determine that the terminal does not have the full-duplex capability, and thus may not schedule the terminal for communication in the subband configured for the terminal.

The technical solution of the present disclosure will be exemplarily described below through several embodiments in the case where the PUSCH includes the PUSCH in a random access message.

In an embodiment, the second resource includes a second frequency domain resource determined according to an uplink grant (UL grant) in a random access response (RAR); and/or the first resource includes a first frequency domain resource determined according to the second frequency domain resource and a frequency domain offset.

The frequency domain offset may be a numerical value, and the unit of the frequency domain offset includes but is not limited to a resource block (RB), a resource element (RE), and a bandwidth (Hz, KHz, MHz, GHz, etc.).

In an embodiment, after determining the second frequency domain resource according to the UL grant in the RAR, a terminal with the full-duplex capability may use the second frequency domain resource as the second resource, and further may use the first frequency domain resource determined according to the second frequency domain resource and the frequency domain offset as the first resource, for example, adding the frequency domain offset to the second frequency domain resource to obtain the first frequency domain resource.

Accordingly, when a terminal with the full-duplex capability sends the PUSCH to a network device, it does not need to use the frequency domain resource configured by the UL grant in the RAR, thereby not occupying the frequency domain resource that may be used by a terminal without the full-duplex capability to send the PUSCH. Then, when a terminal without the full-duplex capability performs random access, it may use any random access opportunity configured by the UL grant in the RAR.

In an embodiment, the frequency domain offset is determined based on at least one of the following:
a protocol agreement;
broadcast information; or
an information field in the uplink grant.

For example, a corresponding relationship between the information field (also referred to as field) contained in the UL grant, that is, the random access response grant field (RAR grant field), and the number of bits is shown in Table 1 below.

**Table 1**

| RAR grant field | Number of bits |
|---|---|
| Frequency hopping flag | 1 |
| PUSCH frequency resource allocation | 14, for operation without shared spectrum channel access |
| | 12, for operation with shared spectrum channel access |
| PUSCH time resource allocation | 4 |
| MCS | 4 |
| TPC command for PUSCH | 3 |
| CSI request | 1 |
| ChannelAccess-CPext | 0, for operation without shared spectrum channel access |
| | 2, for operation with shared spectrum channel access |

As shown in Table 1, the random access response grant field includes frequency hopping flag, PUSCH frequency resource allocation, PUSCH time resource allocation, modulation and coding scheme (MCS), transmission power control for PUSCH (TPC command for PUSCH), channel state information request (CSI request), channel access cyclic prefix extension (ChannelAccess-CPext), etc.

Take the terminal indicating whether the terminal has the full-duplex capability through a resource used by the PUSCH in Msg3 as an example.

A terminal without the full-duplex capability may determine the second resource used to send Msg3 according to the information in Table 1. The frequency domain resource for sending Msg3 may be determined according to the PUSCH frequency resource allocation, for example, a specific resource block may be determined, and the time domain resource for sending Msg3 may be determined according to the PUSCH time resource allocation.

A terminal with the full-duplex capability may also determine the frequency domain offset after determining the second resource. For example, the frequency domain offset may be determined based on broadcast information sent by the network device, in which the broadcast information includes but is not limited to a system information block (SIB), the SIB may include SIB1. Alternatively, the frequency domain offset may be determined based on a protocol agreement.

Alternatively, the terminal may predetermine an association relationship between the frequency domain offset and the indication value, and the association relationship may be determined according to the SIB sent by the network device, or according to the protocol agreement. Then, the indication value in the association relationship may be determined according to the information field in Table 1, and the frequency domain offset may be determined according to the indication value in the association relationship. For example, the indication value may be determined according to n most significant bits (MSBs) in the MCS field, or the n MSBs in the TPC command for PUSCH field, or the indication value may be determined according to n MSBs in the CSI request field.

The above embodiments exemplify the technical solution of the present disclosure in the case where the first resource and the second resource are distinguished in the frequency domain. The technical solution of the present disclosure will be described in some following embodiments in the case where the first resource and the second resource are distinguished in the time domain.

In an embodiment, the first resource includes a first time domain resource determined according to first time domain resource allocation information; and/or the second resource includes a second time domain resource determined according to second time domain resource allocation information.

In an embodiment, when sending a PUSCH in a random access message (e.g., Msg3, MsgA), the terminal may determine the time domain resource according to the time domain resource allocation information, and send the PUSCH in the random access message on the determined time domain resource.

Taking the sending of the PUSCH in Msg3 as an example, the time domain resource allocation information may include a time domain resource allocation (TDRA) table. The terminal may determine the corresponding time domain resource in the TDRA table according to the value of the PUSCH time resource allocation in the UL grant, and then send a random access message on the determined time domain resource.

In order to distinguish the time domain resources used for sending the PUSCH in random access messages by terminals with the full-duplex capability and terminals without the full-duplex capability, second time domain resource allocation information may be configured for all terminals, and first time domain resource allocation information may be additionally configured for terminals with the full-duplex capability, in which the first time domain resource allocation information may be sent to the terminals via broadcast information or synchronous unicast signaling, and the network device may mark the first time domain resource allocation information as dedicated to terminals with the full-duplex capability.

Take the time domain resource allocation information including the TDRA table as an example.

After receiving the UL grant, a terminal with the full-duplex capability may determine the first time domain resource in a first TDRA table according to the value of the PUSCH time resource allocation, and then send the PUSCH in Msg3 to the network device on the first time domain resource. After the network device receives the PUSCH on the first time domain resource, the network device may determine that the terminal has the full-duplex capability.

After receiving the UL grant, a terminal without the full-duplex capability may determine the second time domain resource in the second TDRA table according to the value of the PUSCH time resource allocation, and then send the PUSCH in Msg3 to the network device on the second time domain resource. After the network device receives the PUSCH on the second time domain resource, the network device may determine that the terminal does not have the full-duplex capability.

In an embodiment, the first time domain resource allocation information is a random access channel configuration exclusive to a full-duplex terminal; and/or the second time domain resource allocation information is a legacy random access channel configuration.

The first time domain resource allocation information may be a random access channel configuration exclusive to a terminal with the full-duplex capability. A terminal with the full-duplex capability may send a PUSCH in a random access message to a network device on a time domain resource determined according to the first time domain resource allocation information, and the network device may determine that the terminal has the full-duplex capability. Alternatively, a terminal with the full-duplex capability may also send a PUSCH in a random access message to a network device on a time domain resource determined according to the second time domain resource allocation information, and the network device may determine that the terminal does not have the full-duplex capability. A terminal without the full-duplex capability may only send a PUSCH in a random access message to a network device on a time domain resource determined according to the second time domain resource allocation information, and the network device may determine that the terminal does not have the full-duplex capability.

In an embodiment, when the first time domain resource does not overlap with the second time domain resource, the first time domain resource is used to indicate that the terminal has the full-duplex capability; and/or when the first time domain resource overlaps with the second time domain resource, the first time domain resource is used to indicate that the terminal does not have the full-duplex capability.

In an embodiment, the network device may configure multiple first time domain resources through the first time domain resource allocation information, and may configure multiple second time domain resources through the second time domain resource allocation information. There may be non-overlapped time domain resources and overlapped time domain resources between the multiple first time domain resources and the multiple second time domain resources. Then, when the terminal uses the first time domain resource to send a PUSCH in a random access message to the terminal, if the first time domain resource overlaps with the second time domain resource, the network device may determine that the terminal does not have the full-duplex capability, and if the first time domain resource does not overlap with the second time domain resource, the network device determines that the terminal has the full-duplex capability.

The first time domain resource overlapping with the second time domain resource includes but is not limited to the following two situations: the first time domain resource overlaps with the second time domain resource completely; the first time domain resource overlaps with the second time domain resource partially.

For example, the first time domain resource is the 1st to 5th symbols in slot#1. When the second time domain resource is also the 1st to 5th symbols in slot#1, it can be determined that the first time domain resource completely overlaps with the second time domain resource; when the second time domain resource is the 2nd to 6th symbols in slot#1, it can be determined that the first time domain resource partially overlaps with the second time domain resource.

FIG. 4 is a schematic flowchart of a capability determination method according to an embodiment of the present disclosure. The capability determination method in this embodiment may be performed by a network device, and the network device may communicate with a terminal, the network device includes but is not limited to a base station in a communication system such as a 4G base station, a 5G base station, and a 6G base station, etc., and the terminal includes but is not limited to a communication apparatus such as a mobile phone, a tablet computer, a wearable device, a sensor, an Internet of Things device, etc.

As shown in FIG. 4, the capability determination method may include the following steps.

At step S401, a physical uplink shared channel (PUSCH) sent by a terminal is received.

At step S402, it is determined whether the terminal has a full-duplex capability according to the PUSCH.

In an embodiment, the network device may receive a PUSCH sent by the terminal during a random access process, and may then explicitly or implicitly determine, according to the PUSCH, that the terminal has the full-duplex capability or does not have the full-duplex capability, so that the terminal may be properly configured and/or scheduled according to the terminal's capability, in which full-duplex may also be referred to as subband full duplex (SBFD).

In an embodiment, in a case where the network device determines that the terminal does not have the full-duplex capability, the network device may not configure a subband for the terminal.

In an embodiment, in a case where the network device determines that the terminal does not have the full-duplex capability, even if the network device configures a subband for the terminal, the network device does not schedule the terminal to use the subband for communication.

For example, no downlink subband is configured for the terminal in an uplink time domain resource; for example, no uplink subband is configured for the terminal in a downlink time domain resource. In this way, problems caused by a terminal without the full-duplex capability attempting full-duplex communication in the time domain resource can be avoided, and a waste of the frequency domain resource caused by configuring the subband for the terminal can be avoided.

In an embodiment, the time domain resource includes at least one of the following: a slot, a symbol, for example, the symbol may be an orthogonal frequency division multiplexing (OFDM) symbol.

In an embodiment, the network device may configure a subband for the terminal in case of determining that the terminal has the full-duplex capability. In an embodiment, the network device may also schedule the terminal to communicate on the subband in case of configuring the subband for the terminal.

For example, a downlink subband is configured for the terminal in the uplink time domain resource, then the terminal may be scheduled to perform downlink communication in the downlink subband of the uplink time domain resource, and/or the terminal may be scheduled to perform uplink communication in the frequency domain resource outside the downlink subband corresponding to the uplink time domain resource, thereby realizing full-duplex communication of the terminal in the uplink time domain resource.

For example, an uplink subband is configured for the terminal in the downlink time domain resource, then the terminal may be scheduled to perform uplink communication in the uplink subband of the downlink time domain resource, and/or the terminal may be scheduled to perform downlink communication in the frequency domain resource outside the uplink subband corresponding to the downlink time domain resource, thereby realizing full-duplex communication of the terminal in the downlink time domain resource.

In an embodiment, the network device may first configure subbands for multiple terminals (e.g., all terminals in the same cell). After receiving the PUSCH sent by each terminal during the random access process, it is determined whether each terminal has the full-duplex capability. For the terminal with the full-duplex capability, the network device schedules the terminal with the full-duplex capability to communicate on the subband, while for the terminal without the full-duplex capability, the network device does not schedule the terminal to communicate on the subband.

For example, in the downlink time domain resource, uplink subbands are configured for terminal #1, terminal #2, and terminal #3. During the random access process, terminal #1, terminal #2, and terminal #3 respectively indicate whether they have the full-duplex capability through the resources used for random access. For example, terminal #3 has the full-duplex capability, while terminal #1 and terminal #2 do not have the full-duplex capability.

The network device may schedule terminal #3 to perform uplink communication in the uplink subband of the downlink time domain resource, and/or schedule terminal #3 to perform downlink communication in the frequency domain resource outside the uplink subband corresponding to the downlink time domain resource, thereby achieving full-duplex communication of terminal #3 in the downlink time domain resource. The network device does not schedule terminal #1 or terminal #2 to perform uplink communication in the uplink subband of the downlink time domain resource, so as to avoid problems caused by terminal #1 and terminal #2 attempting to perform full-duplex communication without the full-duplex capability.

In an embodiment, the network device may determine whether the terminal has the full-duplex capability according to indication information carried by the PUSCH. In an embodiment, the network device may determine whether the terminal has the full-duplex capability according to scrambling information of the PUSCH. In an embodiment, the network device may determine whether the terminal has the full-duplex capability according to a resource used to send the PUSCH.

It can be seen that according to the embodiments of the present disclosure, the network device may determine whether the terminal has the full-duplex capability according to the PUSCH, so that the network device may make appropriate configuration and scheduling for the terminal according to the terminal's capability. This is conducive to ensuring that the terminal with the full-duplex capability may be scheduled by the network device in time for full-duplex communication, thereby improving communication efficiency and avoiding problems caused by the terminal without the full-duplex capability being scheduled by the network device for full-duplex communication.

In an embodiment, the physical uplink shared channel includes at least one of the following:
a physical uplink shared channel in a random access message;
a physical uplink shared channel scrambled by scrambling information; or
a physical uplink shared channel sent on a pre-configured resource.

In an embodiment, the network device may receive a random access message sent by the terminal during a random access process. The random access message may carry the PUSCH, and further, it may be determined whether the terminal has the full-duplex capability according to the PUSCH.

In an embodiment, the random access performed by the network device with the terminal may be a four-step random access or a two-step random access. Corresponding to the random access performed, the random access message includes at least one of the following: Msg3 in the four-step random access; or MsgA in the two-step random access.

In a specific implementation, when the network device performs the four-step random access, it may receive a PUSCH carried by Msg3, and determine whether the terminal has the full-duplex capability according to the PUSCH. When the network device performs the two-step random access, it may receive a PUSCH carried by MsgA, and determine whether the terminal has the full-duplex capability according to the PUSCH.

In an embodiment, the network device may configure the scrambling information for the terminal, or the network device and the terminal may determine the scrambling information according to a protocol agreement, and the scrambling information includes but is not limited to a cell radio network temporary identifier (C-RNTI). The PUSCH sent by the terminal and received by the network device may be a PUSCH scrambled by the scrambling information, and the network device may determine whether the terminal has the full-duplex capability according to the PUSCH scrambled by the scrambling information.

In an embodiment, before establishing a communication connection with the terminal, the network device may receive a PUSCH sent by the terminal on a pre-configured resource, for example, the pre-configured resource includes but is not limited to a configured grant (CG) uplink resource. Then the network device may determine whether the terminal has the full-duplex capability according to the PUSCH received on the pre-configured resource.

In an embodiment, determining whether the terminal has the full-duplex capability according to the physical uplink shared channel includes at least one of the following:
determining whether the terminal has the full-duplex capability according to indication information of the physical uplink shared channel;
determining whether the terminal has the full-duplex capability according to scrambling information of the physical uplink shared channel; or
determining whether the terminal has the full-duplex capability according to a resource used to send the physical uplink shared channel.

In an embodiment, the terminal may carry the indication information in the PUSCH, and the indication information explicitly indicates whether the terminal has the full-duplex capability. Correspondingly, after receiving the PUSCH, the network device may parse the indication information in the PUSCH to determine that the terminal has the full-duplex capability or the terminal does not have the full-duplex capability.

It may be determined whether the terminal has the full-duplex capability according to whether the indication information exists. For example, by parsing the PUSCH, the network device determines that the PUSCH does not carry the indication information, then it may determine that the terminal does not have the full-duplex capability; for example, by parsing the PUSCH, the network device determines that the PUSCH carries the indication information, then it may determine that the terminal has the full-duplex capability.

Alternatively, it may be determined whether the terminal has the full-duplex capability according to different values indicated by the indication information. Taking the indication information occupying 1 bit as an example, the network device may determine that the terminal has the full-duplex capability by parsing the PUSCH and determining that the value of the indication information in the PUSCH is 1; for example, the network device may determine that the terminal does not have the full-duplex capability by parsing the PUSCH and determining that the value of the indication information in the PUSCH is 0.

FIG. 5 is a schematic flowchart of a capability determination method according to an embodiment of the present disclosure. As shown in FIG. 5, determining whether the terminal has the full-duplex capability according to the PUSCH includes the following steps.

At step S501, in a case of determining that the physical uplink shared channel is scrambled by first scrambling information, it is determined that the terminal has the full-duplex capability according to the first scrambling information; or, in a case of determining that the physical uplink shared channel is scrambled by second scrambling information, it is determined that the terminal does not have the full-duplex capability according to the second scrambling information. The first scrambling information is different from the second scrambling information.

It should be noted that the embodiment shown in FIG. 5 may be implemented independently or in combination with at least one other embodiment in the present disclosure. The specific selection may be made as needed and the present disclosure is not limited thereto.

In an embodiment, the terminal may scramble the sent PUSCH through scrambling information, in which the scrambling information includes but is not limited to RNTI, such as C-RNTI, and further the scrambling information may be used to indicate whether the terminal has the full-duplex capability.

For example, when the terminal scrambles the PUSCH using the first scrambling information, it may indicate that the terminal has the full-duplex capability. For example, when the terminal scrambles the PUSCH using the second scrambling information, it may indicate that the terminal does not have the full-duplex capability.

Correspondingly, the network device may attempt to decode the PUSCH through the first scrambling information and the second scrambling information. In the case where the PUSCH is successfully decoded through the first scrambling information, the network device may determine that the terminal scrambles the PUSCH through the first scrambling information, and according to the first scrambling information, the network device may determine that the terminal has the full-duplex capability, and then may schedule the terminal to communicate in the subband configured for the terminal; in the case where the PUSCH is successfully decoded through the second scrambling information, the network device may determine that the terminal scrambles the PUSCH through the second scrambling information, and according to the second scrambling information, the network device may determine that the terminal has the full-duplex capability, and thus may not schedule the terminal to communicate in the subband configured for the terminal.

Taking the scrambling information including RNTI as an example, on the one hand, an RNTI specific to a terminal with the full-duplex capability may be determined according to the protocol agreement, for example, also called SBFD-specific RNTI, which is the first scrambling information. On the other hand, the network device may configure a temporary C-RNTI for all terminals in the cell, for example, also called TC-RNTI, which is the second scrambling information.

Take a terminal sending Msg3 to a network device as an example. When a terminal with the full-duplex capability sends Msgs3, it may choose to use SBFD-specific RNTI to scramble the PUSCH carried therein; when a terminal without the full-duplex capability sends Msgs3, it may choose to use TC-RNTI to scramble the PUSCH carried therein.

Correspondingly, the network device may attempt to decode the received Msgs3 through SBFD-specific RNTI and TC-RNTI. If the decoding is successful through SBFD-specific RNTI, it can be determined that the terminal scrambles the PUSCH through SBFD-specific RNTI, and according to the SBFD-specific RNTI, it can be determined that the terminal has the full-duplex capability, and then the terminal may be scheduled for communication in the subband configured for the terminal; in the case of successfully decoding the PUSCH through TC-RNTI, the network device may determine that the terminal scrambles the PUSCH through TC-RNTI, and according to the TC-RNTI, it can be determined that the terminal has the full-duplex capability, and thus the terminal may be not scheduled for communication in the subband configured for the terminal.

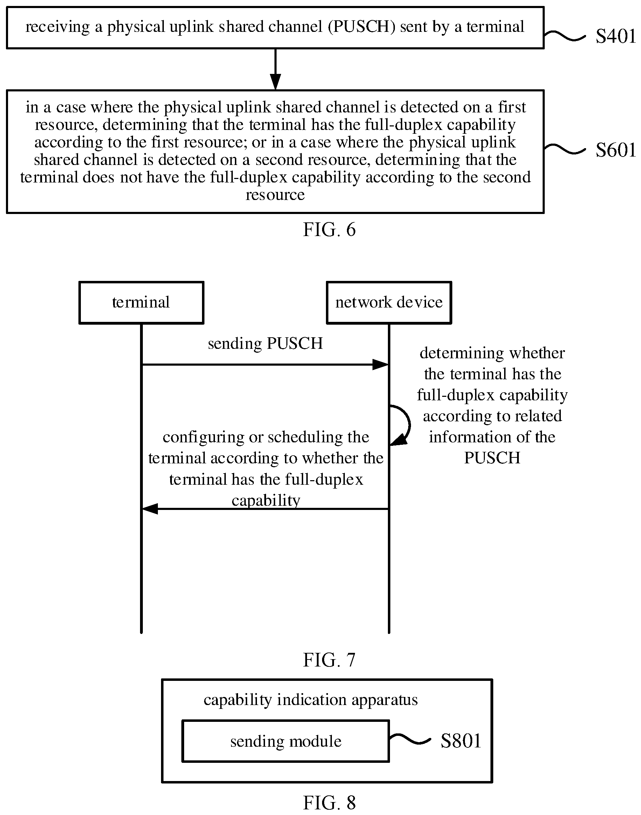

FIG. 6 is a schematic flowchart of a capability determination method according to an embodiment of the present disclosure. As shown in FIG. 6, determining whether the terminal has the full-duplex capability according to the PUSCH includes the following steps.

At step S601, in a case where the physical uplink shared channel is detected on a first resource, it is determined that the terminal has the full-duplex capability according to the first resource; or in a case where the physical uplink shared channel is detected on a second resource, it is determined that the terminal does not have the full-duplex capability according to the second resource.

It should be noted that the embodiment shown in FIG. 6 can be implemented independently or in combination with at least one other embodiment in the present disclosure. The specific selection may be made as needed, and the present disclosure is not limited thereto.

In an embodiment, the terminal may indicate whether the terminal has the full-duplex capability through the resource used to send the PUSCH. For example, when the terminal sends the PUSCH on the first resource, the first resource indicates that the terminal has the full-duplex capability; for example, when the terminal sends the PUSCH on the second resource, the second resource indicates that the terminal does not have the full-duplex capability.

Correspondingly, the network device may attempt to detect the PUSCH on the first resource and the second resource. If the PUSCH is detected on the first resource, the network device may determine that the terminal sends the PUSCH on the first resource, and based on the first resource, the network device may determine that the terminal has the full-duplex capability, and then may schedule the terminal for communication in the subband configured for the terminal; if the PUSCH is detected on the second resource, the network device may determine that the terminal sends the PUSCH on the second resource, and based on the second resource, the network device may determine that the terminal does not have the full-duplex capability, and thus may not schedule the terminal for communication in the subband configured for the terminal.

The technical solution of the present disclosure will be exemplarily described below through several embodiments in the case where the PUSCH includes the PUSCH in a random access message.

In an embodiment, the second resource includes a second frequency domain resource determined according to an uplink grant (UL grant) in a random access response (RAR); and/or the first resource includes a first frequency domain resource determined according to the second frequency domain resource and a frequency domain offset.

The frequency domain offset may be a numerical value, and the unit of the frequency domain offset includes but is not limited to a resource block (RB), a resource element (RE), and a bandwidth (Hz, KHz, MHz, GHz, etc.).

In an embodiment, after determining the second frequency domain resource according to the UL grant in the RAR, a terminal with the full-duplex capability may use the second frequency domain resource as the second resource, and further may use the first frequency domain resource determined according to the second frequency domain resource and the frequency domain offset as the first resource, for example, adding the frequency domain offset to the second frequency domain resource to obtain the first frequency domain resource.

Accordingly, when a terminal with the full-duplex capability sends the PUSCH to a network device, the terminal does not use the frequency domain resource configured by the UL grant in the RAR, thereby not occupying the frequency domain resource that may be used by a terminal without the full-duplex capability to send the PUSCH. Then, when a terminal without the full-duplex capability performs random access, it may use any random access opportunity configured by the UL grant in the RAR.

In an embodiment, the frequency domain offset is determined based on at least one of the following:
a protocol agreement;
broadcast information; or
an information field in the uplink grant.

For example, a corresponding relationship between the information field (also referred to as field) contained in the UL grant, that is, the random access response grant field (RAR grant field), and the number of bits is shown in Table 1 described above (i.e., RAR grant field).

As shown in Table 1, the random access response grant field includes frequency hopping flag, PUSCH frequency resource allocation, PUSCH time resource allocation, modulation and coding scheme (MCS), transmission power control for PUSCH (TPC command for PUSCH), channel state information request (CSI request), channel access cyclic prefix extension (ChannelAccess-CPext), etc.

Take the network device determining whether the terminal has the full-duplex capability according to a resource used by the PUSCH in Msg3 as an example.

A terminal without the full-duplex capability may determine the second resource used to send Msg3 according to the information in Table 1. The frequency domain resource for sending Msg3 may be determined according to the PUSCH frequency resource allocation, for example, a specific resource block may be determined, and the time domain resource for sending Msg3 may be determined according to the PUSCH time resource allocation.

A terminal with the full-duplex capability may also determine the frequency domain offset after determining the second resource. For example, the frequency domain offset may be determined based on broadcast information sent by the network device, in which the broadcast information includes but is not limited to a system information block (SIB), the SIB may include SIB1. Alternatively, the frequency domain offset may be determined based on a protocol agreement.

Alternatively, the terminal may predetermine an association relationship between the frequency domain offset and the indication value, and the association relationship may be determined according to the SIB sent by the network device, or according to the protocol agreement. Then, the indication value in the association relationship may be determined according to the information field in Table 1, and the frequency domain offset may be determined according to the indication value in the association relationship. For example, the indication value may be determined according to n most significant bits (MSBs) in the MCS field, or the n MSBs in the TPC command for PUSCH field, or the indication value may be determined according to n MSBs in the CSI request field.

Correspondingly, the network device may determine the second resource used to receive Msg3 based on the information in Table 1, and may also determine the frequency domain offset, for example, determining the frequency domain offset based on the broadcast information, for example, determining the indication value in the association relationship based on the information domain in Table 1, and then determining the frequency domain offset based on the indication value in the association relationship between a predetermined frequency domain offset and the indication value.

The first resource may be determined according to the second resource and the frequency domain offset, and then the PUSCH sent by the terminal through Msg3 may be monitored on the first resource and the second resource. If the PUSCH is detected on the first resource, the network device may determine that the terminal sends the PUSCH on the first resource, and may determine that the terminal has the full-duplex capability according to the first resource, and then may schedule the terminal for communication in the subband configured for the terminal; if the PUSCH is detected on the second resource, the network device may determine that the terminal sends the PUSCH on the second resource, and may determine that the terminal does not have the full-duplex capability according to the second resource, and thus may not schedule the terminal for communication in the subband configured for the terminal.

The above embodiments exemplify the technical solution of the present disclosure in the case where the first resource and the second resource are distinguished in the frequency domain. The technical solution of the present disclosure will be described in some following embodiments in the case where the first resource and the second resource are distinguished in the time domain.

In an embodiment, the first resource includes a first time domain resource determined according to first time domain resource allocation information; and/or the second resource includes a second time domain resource determined according to second time domain resource allocation information.

In an embodiment, when receiving a PUSCH in a random access message (e.g., Msg3, MsgA) sent by the terminal, the network device may determine the time domain resource according to the time domain resource allocation information, and receive the PUSCH in the random access message on the determined time domain resource.

Taking the receiving of the PUSCH in Msg3 as an example, the time domain resource allocation information may include a time domain resource allocation (TDRA) table. The network device may determine the corresponding time domain resource in the TDRA table according to the value of the PUSCH time resource allocation in the UL grant sent to the terminal, and then receive a random access message on the determined time domain resource.

In order to distinguish the time domain resources used for sending the PUSCH in random access messages by terminals with the full-duplex capability and terminals without the full-duplex capability, second time domain resource allocation information may be configured for all terminals, and first time domain resource allocation information may be additionally configured for terminals with the full-duplex capability, in which the first time domain resource allocation information may be sent to the terminals via broadcast information or synchronous unicast signaling, and the network device may mark the first time domain resource allocation information as dedicated to terminals with the full-duplex capability.

Take the time domain resource allocation information including the TDRA table as an example.

After receiving the UL grant, a terminal with the full-duplex capability may determine the first time domain resource in a first TDRA table according to the value of the PUSCH time resource allocation, and then send the PUSCH in Msg3 to the network device on the first time domain resource. After the network device receives the PUSCH on the first time domain resource, the network device may determine that the terminal has the full-duplex capability.

After receiving the UL grant, a terminal without the full-duplex capability may determine the second time domain resource in the second TDRA table according to the value of the PUSCH time resource allocation, and then send the PUSCH in Msg3 to the network device on the second time domain resource. After the network device receives the PUSCH on the second time domain resource, the network device may determine that the terminal does not have the full-duplex capability.

In an embodiment, the first time domain resource allocation information is a random access channel configuration exclusive to a full-duplex terminal; and/or the second time domain resource allocation information is a legacy random access channel configuration.

The first time domain resource allocation information may be a random access channel configuration exclusive to a terminal with the full-duplex capability. A terminal with the full-duplex capability may send a PUSCH in a random access message to a network device on a time domain resource determined according to the first time domain resource allocation information, and the network device may determine that the terminal has the full-duplex capability. Alternatively, a terminal with the full-duplex capability may also send a PUSCH in a random access message to a network device on a time domain resource determined according to the second time domain resource allocation information, and the network device may determine that the terminal does not have the full-duplex capability. A terminal without the full-duplex capability may only send a PUSCH in a random access message to a network device on a time domain resource determined according to the second time domain resource allocation information, and the network device may determine that the terminal does not have the full-duplex capability.

In an embodiment, determining whether the terminal has the full-duplex capability according to the PUSCH further includes: determining that the terminal has the full-duplex capability, in a case where the first time domain resource does not overlap with the second time domain resource; and/or determining that the terminal does not have the full-duplex capability, in a case where the first time domain resource overlaps with the second time domain resource.

In an embodiment, the network device may configure multiple first time domain resources through the first time domain resource allocation information, and may configure multiple second time domain resources through the second time domain resource allocation information. There may be non-overlapped time domain resources and overlapped time domain resources between the multiple first time domain resources and the multiple second time domain resources. Then, when the terminal uses the first time domain resource to send a PUSCH in a random access message to the terminal, if the first time domain resource overlaps with the second time domain resource, the network device may determine that the terminal does not have the full-duplex capability, and if the first time domain resource does not overlap with the second time domain resource, the network device determines that the terminal has the full-duplex capability.

The first time domain resource overlapping with the second time domain resource includes but is not limited to the following two situations: the first time domain resource overlaps with the second time domain resource completely; the first time domain resource overlaps with the second time domain resource partially.

For example, the first time domain resource is the 1st to 5th symbols in slot#1. When the second time domain resource is also the 1st to 5th symbols in slot#1, it can be determined that the first time domain resource completely overlaps with the second time domain resource; when the second time domain resource is the 2nd to 6th symbols in slot#1, it can be determined that the first time domain resource partially overlaps with the second time domain resource.

FIG. 7 is a schematic diagram showing interaction between a terminal and a network device according to an embodiment of the present disclosure.

As shown in FIG. 7, the terminal may send a PUSCH to the network device, for example, before establishing a communication connection with the network device, or during a random access process, or after establishing a communication connection with the network device. The PUSCH may be used to indicate whether the terminal has the full-duplex capability. For example, the terminal may indicate whether the terminal has the full-duplex capability through indication information carried by the PUSCH, scrambling information of the PUSCH, a resource used by the PUSCH, and the like.

Correspondingly, the network device may determine the PUSCH by receiving the PUSCH sent by the terminal, and then determine whether the terminal has the full-duplex capability according to the PUSCH, so as to appropriately configure and schedule the terminal. For example, if it is determined that the terminal has the full-duplex capability, the terminal may be scheduled for communication in the subband configured for the terminal, and if it is determined that the terminal does not have the full-duplex capability, the terminal is not scheduled for communication in the subband configured for the terminal.

In an embodiment, whether the terminal has the full-duplex capability may be indicated through indication information carried by the PUSCH.

For example, the terminal may carry the indication information in the PUSCH to explicitly indicate whether the terminal has the full-duplex capability through the indication information. Correspondingly, after receiving the PUSCH, the network device may parse the indication information in the PUSCH to determine that the terminal has the full-duplex capability or that the terminal does not have the full-duplex capability.

Whether the indication information exists can be used to distinguish and indicate whether the terminal has the full-duplex capability. For example, by parsing the PUSCH, the network device determines that the PUSCH does not carry the indication information, then it may determine that the terminal does not have the full-duplex capability; for example, by parsing the PUSCH, the network device determines that the PUSCH carries the indication information, then it may determine that the terminal has the full-duplex capability.

Alternatively, different values may be indicated by the indication information to distinguish and indicate whether the terminal has the full-duplex capability. Taking the indication information occupying 1 bit as an example, the network device may determine that the terminal has the full-duplex capability by parsing the PUSCH and determining that the value of the indication information in the PUSCH is 1; for example, the network device may determine that the terminal does not have the full-duplex capability by parsing the PUSCH and determining that the value of the indication information in the PUSCH is 0.

In an embodiment, whether the terminal has the full-duplex capability may be indicated by scrambling information of the PUSCH.

For example, the terminal may scramble the sent PUSCH through the scrambling information. When the PUSCH is scrambled through first scrambling information, it may indicate that the terminal has the full-duplex capability. For example, when the PUSCH is scrambled through second scrambling information, it may indicate that the terminal does not have the full-duplex capability.

Correspondingly, the network device may attempt to decode the PUSCH through the first scrambling information and the second scrambling information. In the case where the PUSCH is successfully decoded through the first scrambling information, the network device may determine that the terminal scrambles the PUSCH through the first scrambling information, and according to the first scrambling information, the network device may determine that the terminal has the full-duplex capability, and then may schedule the terminal for communication in the subband configured for the terminal; in the case where the PUSCH is successfully decoded through the second scrambling information, the network device may determine that the terminal scrambles the PUSCH through the second scrambling information, and according to the second scrambling information, the network device may determine that the terminal has the full-duplex capability, and thus may not schedule the terminal for communication in the subband configured for the terminal.

In an embodiment, whether the terminal has the full-duplex capability may be indicated by the resource used to send the PUSCH.

For example, when the terminal sends the PUSCH on the first resource, the first resource indicates that the terminal has the full-duplex capability; for example, when the terminal sends the PUSCH on the second resource, the second resource indicates that the terminal does not have the full-duplex capability.

Correspondingly, the network device may attempt to detect (also described as receiving) the PUSCH on the first resource and the second resource. If the PUSCH is detected on the first resource, the network device may determine that the terminal sends the PUSCH on the first resource, and based on the first resource, the network device may determine that the terminal has the full-duplex capability, and then may schedule the terminal for communication in the subband configured for the terminal; if the PUSCH is detected on the second resource, the network device may determine that the terminal sends the PUSCH on the second resource, and based on the second resource, the network device may determine that the terminal does not have the full-duplex capability, and thus may not schedule the terminal for communication in the subband configured for the terminal.

In an embodiment, the second resource includes a second frequency domain resource determined according to an uplink grant in a random access response; and/or the first resource includes a first frequency domain resource determined according to the second frequency domain resource and a frequency domain offset.

For example, after determining the second frequency domain resource according to the UL grant in the RAR, a terminal with the full-duplex capability may use the second frequency domain resource as the second resource, and then may use the first frequency domain resource determined according to the second frequency domain resource and the frequency domain offset as the first resource, for example, adding the frequency domain offset to the second frequency domain resource to obtain the first frequency domain resource.

Accordingly, when a terminal with the full-duplex capability sends the PUSCH to the network device, the terminal does not use the frequency domain resource configured by the UL grant in the RAR, and thus does not occupy the frequency domain resource that may be used by a terminal without the full-duplex capability to send PUSCH. Then, when a terminal without the full-duplex capability performs random access, the terminal may use any random access opportunity configured by the UL grant in the RAR.

**In** an embodiment, the first resource includes a first time domain resource determined according to first time domain resource allocation information; and/or the second resource includes a second time domain resource determined according to second time domain resource allocation information.

For example, when sending the PUSCH in a random access message (e.g., Msg3, MsgA), the terminal may determine the time domain resource according to the time domain resource allocation information, and send the PUSCH in the random access message on the determined time domain resource.

Taking the sending of the PUSCH in Msg3 as an example, the time domain resource allocation information may include a TDRA table. The terminal may determine the corresponding time domain resource in the TDRA table according to the value of PUSCH time resource allocation in the UL grant, and then send a random access message on the determined time domain resource.

In order to distinguish the time domain resources used for sending the PUSCH in random access messages by terminals with the full-duplex capability and terminals without the full-duplex capability, second time domain resource allocation information may be configured for all terminals, and first time domain resource allocation information may be additionally configured for terminals with the full-duplex capability, in which the first time domain resource allocation information may be sent to the terminals via broadcast information or synchronous unicast signaling, and the network device may mark the first time domain resource allocation information as dedicated to terminals with the full-duplex capability.

It should be noted that for other contents involved in this embodiment, reference may be made to the description of the relevant contents in the previous embodiments, which will not be repeated here.

Corresponding to the aforementioned embodiments of the capability indication method and the capability determination method, the present disclosure also provides embodiments of a capability indication apparatus and a capability determination apparatus.

FIG. 8 is a block diagram of a capability indication apparatus according to an embodiment of the present disclosure. As shown in FIG. 8, the capability indication apparatus includes a sending module 801.

The sending module 801 is configured to send a physical uplink shared channel (PUSCH) to a network device, in which the PUSCH is used to indicate whether the terminal has a full-duplex capability.

In an embodiment, the physical uplink shared channel includes at least one of the following:
a physical uplink shared channel in a random access message;
a physical uplink shared channel scrambled by scrambling information; or
a physical uplink shared channel sent on a pre-configured resource.

In an embodiment, the random access message includes at least one of the following:
Msg3 in a four-step random access; or
MsgA in a two-step random access.

In an embodiment, the physical uplink shared channel is configured to indicate whether the terminal has the full-duplex capability by at least one of:
indication information carried by the physical uplink shared channel, in which the indication information indicates whether the terminal has the full-duplex capability;
scrambling information of the physical uplink shared channel, in which the scrambling information indicates whether the terminal has the full-duplex capability; or
a resource used to send the physical uplink shared channel, in which the resource is used to indicate whether the terminal has the full-duplex capability.

In an embodiment, the sending module is configured so that first scrambling information indicates that the terminal has the full-duplex capability in a case where the physical uplink shared channel is scrambled by the first scrambling information, or second scrambling information indicates that the terminal does not have the full-duplex capability in a case where the physical uplink shared channel is scrambled by the second scrambling information.

In an embodiment, the sending module is configured so that a first resource is used to indicate that the terminal has the full-duplex capability in a case where the physical uplink shared channel is sent on the first resource; or a second resource is used to indicate that the terminal does not have the full-duplex capability in a case where the physical uplink shared channel is sent on the second resource.

In an embodiment, the second resource includes a second frequency domain resource determined according to an uplink grant in a random access response; and/or the first resource includes a first frequency domain resource determined according to a second frequency domain resource and a frequency domain offset.

In an embodiment, the frequency domain offset is determined based on at least one of: a protocol agreement; broadcast information; or an information field in the uplink grant.

In an embodiment, the first resource includes a first time domain resource determined according to first time domain resource allocation information; and/or the second resource includes a second time domain resource determined according to second time domain resource allocation information.

In an embodiment, the first time domain resource allocation information is a random access channel configuration exclusive to a full-duplex terminal; and/or the second time domain resource allocation information is a legacy random access channel configuration.

In an embodiment, in a case where the first time domain resource and the second time domain resource do not overlap, the first time domain resource is used to indicate that the terminal has the full-duplex capability; and/or in a case where the first time domain resource overlaps with the second time domain resource, the first time domain resource is used to indicate that the terminal does not have the full-duplex capability.

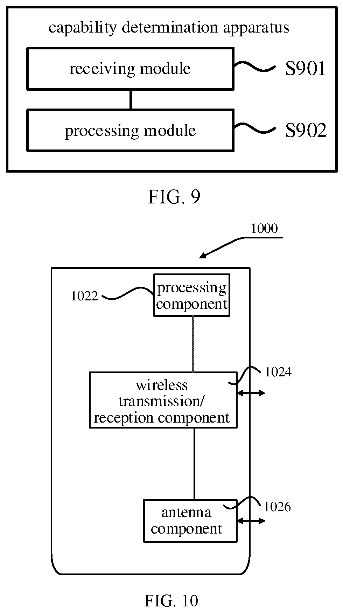

FIG. 9 is a block diagram of a capability determination apparatus according to an embodiment of the present disclosure. As shown in FIG. 9, the capability determination apparatus includes a receiving module 901 and a processing module 902.

The receiving module 901 is configured to receive a physical uplink shared channel sent by a terminal.

The processing module 902 is configured to determine whether the terminal has a full-duplex capability according to the physical uplink shared channel.

In an embodiment, the physical uplink shared channel includes at least one of the following:
a physical uplink shared channel in a random access message;
a physical uplink shared channel scrambled by scrambling information; or
a physical uplink shared channel sent on a pre-configured resource.

In an embodiment, the random access message includes at least one of the following:
Msg3 in a four-step random access; or
MsgA in a two-step random access.

In an embodiment, determining whether the terminal has the full-duplex capability according to the physical uplink shared channel includes at least one of:
determining whether the terminal has the full-duplex capability according to indication information of the physical uplink shared channel;
determining whether the terminal has the full-duplex capability according to scrambling information of the physical uplink shared channel; or
determining whether the terminal has the full-duplex capability according to a resource used to send the physical uplink shared channel.

In an embodiment, the processing module is configured to determine that the terminal has the full-duplex capability according to first scrambling information in a case of determining that the physical uplink shared channel is scrambled by the first scrambling information, or determine that the terminal does not have the full-duplex capability according to second scrambling information in a case of determining that the physical uplink shared channel is scrambled by the second scrambling information.

In an embodiment, the processing module is configured to determine that the terminal has the full-duplex capability according to a first resource, in a case where the physical uplink shared channel is detected on the first resource; or determine that the terminal does not have the full-duplex capability according to a second resource, in a case where the physical uplink shared channel is detected on the second resource.

In an embodiment, the second resource includes a second frequency domain resource determined according to an uplink grant in a random access response; and/or the first resource includes a first frequency domain resource determined according to a second frequency domain resource and a frequency domain offset.

In an embodiment, the frequency domain offset is determined based on at least one of: a protocol agreement; broadcast information; or an information field in the uplink grant.

In an embodiment, the first resource includes a first time domain resource determined according to first time domain resource allocation information; and/or the second resource includes a second time domain resource determined according to second time domain resource allocation information.

In an embodiment, the first time domain resource allocation information is a random access channel configuration exclusive to a full-duplex terminal; and/or the second time domain resource allocation information is a legacy random access channel configuration.

In an embodiment, the processing module is further configured to determine that the terminal has the full-duplex capability in a case where the first time domain resource and the second time domain resource do not overlap, or determine that the terminal does not have the full-duplex capability in a case where the first time domain resource overlaps with the second time domain resource.

Since the apparatus embodiments basically correspond to the method embodiments, reference may be made to the description of the method embodiments. The apparatus embodiments described above are only schematic, in which the modules described as separate components may or may not be physically separated, and the components displayed as modules may or may not be physical modules, that is, they may be located in one place, or they may be distributed on multiple network modules. Some or all of the modules may be selected according to actual needs to achieve the purpose of the technical solution of the embodiments. Ordinary technicians in the field can understand and implement it without doing any creative work.

An embodiment of the present disclosure further proposes a capability indication system, including a terminal and a network device. The terminal is configured to implement the capability indication method described in any of the above embodiments, and the network device is configured to implement the capability determination method described in any of the above embodiments.

An embodiment of the present disclosure further proposes a communication apparatus, including: a processor; and a memory for storing a computer program. When the computer program is executed by the processor, the capability indication method described in any of the above embodiments is implemented.

An embodiment of the present disclosure further proposes a communication apparatus, including: a processor; and a memory for storing a computer program. When the computer program is executed by the processor, the capability determination method described in any of the above embodiments is implemented.

An embodiment of the present disclosure further proposes a computer-readable storage medium for storing a computer program. When the computer program is executed by the processor, the capability indication method described in any of the above embodiments is implemented.

An embodiment of the present disclosure further proposes a computer-readable storage medium for storing a computer program. When the computer program is executed by the processor, the capability determination method described in any of the above embodiments is implemented.

As shown in FIG. 10, FIG. 10 is a schematic block diagram of an apparatus 1000 for capability determination according to an embodiment of the present disclosure. The apparatus 1000 may be a base station. Referring to FIG. 10, the apparatus 1000 includes a processing component 1022, a wireless transmission/reception component 1024, an antenna component 1026, and a signal processing part specific to a wireless interface. The processing component 1022 may further include one or more processors. One of the processors in the processing component 1022 may be configured to implement the capability determination method performed by the network device as described in any of the above embodiments.

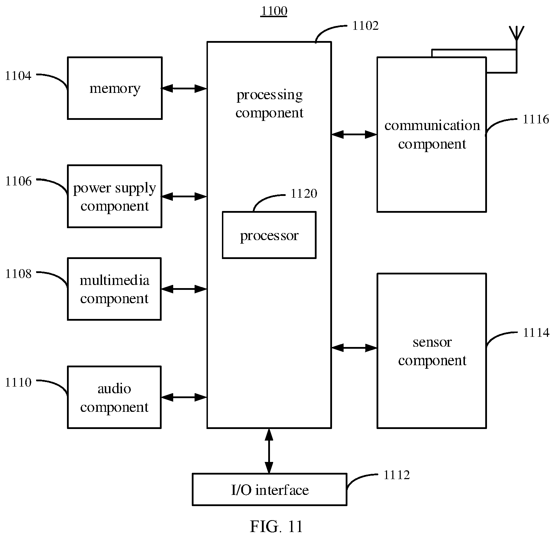

FIG. 11 is a schematic block diagram of an apparatus 1100 for capability indication according to an embodiment of the present disclosure. For example, the apparatus 1100 may be a terminal, such as a mobile phone, a computer, a digital broadcasting terminal, a message transceiver device, a gaming console, a tablet device, a medical device, a fitness device, a personal digital assistant, etc.

Referring to FIG. 11, the apparatus 1100 may include one or more of the following components: a processing component 1102, a memory 1104, a power supply component 1106, a multimedia component 1108, an audio component 1110, an input/output (I/O) interface 1112, a sensor component 1114, and a communication component 1116.

The processing component 1102 generally controls the overall operations of the apparatus 1100, such as operations associated with displays, telephone calls, data communications, camera operations, and recording operations. The processing component 1102 may include one or more processors 1120 to execute instructions to accomplish all or some of the steps of the method described above. Alternatively, the processing component 1102 may include one or more modules to facilitate interactions between the processing component 1102 and other components. For example, the processing component 1102 may include a multimedia module to facilitate interactions between the multimedia component 1108 and the processing component 1102.

The memory 1104 is configured to store various types of data to support operation at the apparatus 1100. Examples of such data include instructions for any application or method operated on the apparatus 1100, contact data, phone book data, messages, pictures, videos, etc.

The power supply component 1106 provides power to the various components of the apparatus 1100. The power supply component 1106 may include a power management system, one or more power supplies, and other components associated with generating, managing, and distributing power for the apparatus 1100.

The multimedia component 1108 includes a screen providing an output interface between the apparatus 1100 and a user. In some embodiments, the screen may include a liquid crystal display (LCD) and a touch panel (TP). In the case that the screen includes a touch panel, the screen may be implemented as a touch screen to receive input signals from the user.

The audio component 1110 is configured to output and/or input audio signals. For example, the audio component 1110 includes a microphone (MIC) that is configured to receive external audio signals when the apparatus 1100 is in an operating mode, such as a call mode, a recording mode, and a voice recognition mode. The received audio signals may be further stored in the memory 1104 or sent in the communication component 1116. In some embodiments, the audio component 1110 further includes a speaker for outputting audio signals.

The I/ O interface 1112 provides an interface between the processing component 1102 and a peripheral interface module, said peripheral interface module may be a keypad, a click wheel, buttons, etc. These buttons may include, but are not limited to: a home button, a volume button, a start button, and a lock button.

The sensor component 1114 includes one or more sensors for providing various aspects of status assessment for the apparatus 1100.

The communication component 1116 is configured to facilitate communication between the apparatus 1100 and other devices by wired or wireless means. The apparatus 1100 may access a wireless network based on a communication standard, such as Wi-Fi, 2G, 3G, 4G LTE or 5G NR, or their combination. In an exemplary embodiment, the communication component 1116 receives broadcast signals or broadcast-related information from an external broadcast management system in a broadcast channel. In an exemplary embodiment, the communication component 1116 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the apparatus 1100 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In example embodiments, there is also provided a non-transitory computer-readable storage medium including instructions, such as a memory 1104 including instructions, the instructions being executable by a processor 1120 of the apparatus 1100 for accomplishing the above-described method. For example, the non-transitory computer-readable storage medium may be a ROM, a random access memory (RAM), a CD-ROM, a magnetic tape, floppy disks, and optical data storage devices, etc.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as exemplary, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. A capability indication method, performed by a terminal, comprising:
sending a physical uplink shared channel to a network device, wherein the physical uplink shared channel is configured to indicate whether the terminal has a full-duplex capability.

2. The method of claim 1, wherein the physical uplink shared channel comprises at least one of:
a physical uplink shared channel in a random access message;
a physical uplink shared channel scrambled through scrambling information; or
a physical uplink shared channel sent on a pre-configured resource.

3. The method of claim 2, wherein the random access message comprises at least one of:
Msg3 in a four-step random access; or
MsgA in a two-step random access.

4. The method of any of claims 1-3, wherein the physical uplink shared channel being configured to indicate whether the terminal has the full-duplex capability comprises at least one of:
indication information carried by the physical uplink shared channel, wherein the indication information indicates whether the terminal has the full-duplex capability;
scrambling information of the physical uplink shared channel, wherein the scrambling information indicates whether the terminal has the full-duplex capability; or
a resource used to send the physical uplink shared channel, wherein the resource is used to indicate whether the terminal has the full-duplex capability.

5. The method of claim 4, wherein the scrambling information indicating whether the terminal has the full-duplex capability comprises:
in a case where the physical uplink shared channel is scrambled through first scrambling information, the first scrambling information indicating that the terminal has the full-duplex capability; or
in a case where the physical uplink shared channel is scrambled through second scrambling information, the second scrambling information indicating that the terminal does not have the full-duplex capability,.

6. The method of claim 4, wherein the resource indicating whether the terminal has the full-duplex capability comprises:
in a case where the physical uplink shared channel is sent on a first resource, the first resource being used to indicate that the terminal has the full-duplex capability; or
in a case where the physical uplink shared channel is sent on a second resource, the second resource being used to indicate that the terminal does not have the full-duplex capability.

7. The method of claim 6, wherein the second resource comprises a second frequency domain resource determined according to an uplink grant in a random access response; and/or
the first resource comprises a first frequency domain resource determined according to a second frequency domain resource and a frequency domain offset.

8. The method of claim 7, wherein the frequency domain offset is determined based on at least one of:
a protocol agreement;
broadcast information; or
an information field in the uplink grant.

9. The method of claim 6, wherein the first resource comprises a first time domain resource determined according to first time domain resource allocation information; and/or
the second resource comprises a second time domain resource determined according to second time domain resource allocation information.

10. The method of claim 9, wherein the first time domain resource allocation information is a random access channel configuration exclusive to a full-duplex terminal; and/or the second time domain resource allocation information is a legacy random access channel configuration.

11. The method of claim 10, wherein in a case where the first time domain resource and the second time domain resource do not overlap, the first time domain resource is used to indicate that the terminal has the full-duplex capability; and/or
in a case where the first time domain resource overlaps with the second time domain resource, the first time domain resource is used to indicate that the terminal does not have the full-duplex capability.

12. A capability determination method, performed by a network device, comprising:
receiving a physical uplink shared channel sent by a terminal; and
determining whether the terminal has a full-duplex capability according to the physical uplink shared channel.

13. The method of claim 12, wherein the physical uplink shared channel comprises at least one of:
a physical uplink shared channel in a random access message;
a physical uplink shared channel scrambled through scrambling information; or
a physical uplink shared channel sent on a pre-configured resource.

14. The method of claim 13, wherein the random access message comprises at least one of:
Msg3 in a four-step random access; or
MsgA in a two-step random access.

15. The method of any of claims 12-14, wherein determining whether the terminal has the full-duplex capability according to the physical uplink shared channel comprises at least one of:
determining whether the terminal has the full-duplex capability according to indication information of the physical uplink shared channel;
determining whether the terminal has the full-duplex capability according to scrambling information of the physical uplink shared channel; or
determining whether the terminal has the full-duplex capability according to a resource used to send the physical uplink shared channel.

16. The method of claim 15, wherein determining whether the terminal has the full-duplex capability according to the physical uplink shared channel comprises:
in a case of determining that the physical uplink shared channel is scrambled through first scrambling information, determining that the terminal has the full-duplex capability according to the first scrambling information; or
in a case of determining that the physical uplink shared channel is scrambled through second scrambling information, determining that the terminal does not have the full-duplex capability according to the second scrambling information.

17. The method of claim 15, wherein determining whether the terminal has the full-duplex capability according to the physical uplink shared channel comprises:
in a case where the physical uplink shared channel is detected on a first resource, determining that the terminal has the full-duplex capability according to the first resource; or
in a case where the physical uplink shared channel is detected on a second resource, determining that the terminal does not have the full-duplex capability according to the second resource.

18. The method of claim 17, wherein the second resource comprises a second frequency domain resource determined according to an uplink grant in a random access response; and/or
the first resource comprises a first frequency domain resource determined according to a second frequency domain resource and a frequency domain offset.

19. The method of claim 18, wherein the frequency domain offset is determined based on at least one of:
a protocol agreement;
broadcast information; or
an information field in the uplink grant.

20. The method of claim 17, wherein the first resource comprises a first time domain resource determined according to first time domain resource allocation information; and/or
the second resource comprises a second time domain resource determined according to second time domain resource allocation information.

21. The method of claim 20, wherein the first time domain resource allocation information is a random access channel configuration exclusive to a full-duplex terminal; and/or the second time domain resource allocation information is a legacy random access channel configuration.

22. The method of claim 21, wherein determining whether the terminal has the full-duplex capability according to the physical uplink shared channel further comprises:
in a case where the first time domain resource and the second time domain resource do not overlap, determining that the terminal has the full-duplex capability; and/or
in a case where the first time domain resource overlaps with the second time domain resource, determining that the terminal does not have the full-duplex capability.

23. A capability indication apparatus, comprising:
a sending module, configured to send a physical uplink shared channel to a network device, wherein the physical uplink shared channel is configured to indicate whether the terminal has a full-duplex capability.

24. A capability determination apparatus, comprising:
a receiving module, configured to receive a physical uplink shared channel sent by a terminal; and
a processing module, configured to determine whether the terminal has a full-duplex capability according to the physical uplink shared channel.

25. A capability indication system, comprising a terminal, a network device, wherein the terminal is configured to perform the capability indication method of any one of claims 1-11, and the network device is configured to perform the capability determination method of any one of claims 12-22.

26. A communication apparatus, comprising:
a processor; and
a memory for storing a computer program;
wherein when the computer program is executed by the processor, the capability indication method of any one of claims 1 to 11 is implemented.

27. A communication apparatus, comprising:
a processor; and
a memory for storing a computer program;
wherein when the computer program is executed by the processor, the capability determination method of any one of claims 12 to 22 is implemented.

28. A computer-readable storage medium for storing a computer program, wherein when the computer program is executed by a processor, the capability indication method of any one of claims 1 to 11 is implemented.

29. A computer-readable storage medium for storing a computer program, wherein when the computer program is executed by a processor, the capability determination method of any one of claims 12 to 22 is implemented.
